# EUROPEAN PATENT APPLICATION

(11) **EP 3 316 020 A1**
(43) Date of publication of application: **02.05.2018**
(21) Application number: 16814150.5
(22) Date of filing: 07.06.2016
(51) Int. Cl.: G02B 27/01, B60K 35/00, G03B 21/10, G03B 21/62

(54) **SCREEN DEVICE AND HEAD-UP DISPLAY DEVICE**

(30) Priority: 26.06.2015 JP 2015129131
(71) Applicant: Nippon Seiki Co., Ltd., Nagaoka-shi, Niigata 940-8580 (JP)
(72) Inventor: SATO, Megumi, Nagaoka, Niigata (JP); MOROHASHI, Kazuo, Nagaoka, Niigata (JP); MATSUURA, Kazuya, Nagaoka, Niigata (JP)
(74) Representative: Carpmaels & Ransford LLP
(86) International application number: PCT/JP2016/066886
(87) International publication number: WO 2016/208379

(57) **Abstract**

Provided are a screen device and a head-up display device which allow the quality of a display image to be improved. The head-up display device 100 comprises a screen device 1, a display 21 for emitting projection light, and a focus position adjustment unit 30 for receiving projection light L emitted from the display 21, changing the distance to a focus position for at least a portion of the incident projection light L, and adjusting the projection light L to have different distances to a focus position. The screen device 1 is provided with a light shielding part 50 preventing first display light N1 emitted from a first display image M1 from reaching a second screen 42. The head-up display device 100 emits the first display light N1 from the first display image M1 displayed on a first screen 41 and second display light N2 from a second display image M2 displayed on the second screen 42, and displays the two display images M1, M2 as virtual images V through a windshield 200, the second display light N2 being prevented from mixing with second projection light L2 projected onto the second screen 42.

## Description

### TECHNICAL FIELD

The present invention relates to a screen device and a head-up display device.

### BACKGROUND ART

A head-up display device is mounted onto a vehicle, and displays information required for driving or the like as a virtual image for a driver via a light transmission member such as a front glass. In this manner, the information can be displayed while it is overlapped on a landscape at a front side of a vehicle and thus the driver can keep track of the required information without making a large movement of line of the sight while in driving.

For example, a head-up display device disclosed in Patent Literature 1 is provided with: two displays (projection units); a half mirror; and a combiner unit, and by means of the half mirror, transmission light and reflection light are overlapped on each other and then are projected onto the combiner unit, and two display images (virtual images) of which display lengths are different from each other are displayed at a front side of a front glass so as to be visually recognized by a user.

### CITATION LIST

### PATENT LITERATURE

Patent Literature 1: Japanese Unexamined Patent Application Publication No. 2003-237412

### SUMMARY OF THE INVENTION

### PROBLEMS TO BE SOLVED BY THE INVENTION

However, in the head-up display device described in Patent Literature 1, a display (a projection unit) is provided as to each display image and thus a structure of the head-up display device is complicated or upsized, and there is a room to be improved. In addition, the projection light that has been emitted from the display (the projection unit) is employed after having passed through the half mirror; and therefore, there is a problem that a quality of a display image is degraded.

On the other hand, if an attempt is made to project two display images of which display lengths are different from each other by one display (a projection unit) and then form images on two screens, in one of the projection light that is divided into two sections, the other redundant light is projected as strayed light, and there is an apprehension that the quality of the display image is degraded.

The present invention solves the problem described above, and it is an object of the present invention to provide a screen device and a head-up display device which allows a quality of a display image to be improved.

### MEANS FOR SOLVING THE PROBLEM

In order to achieve the above object, according to a screen device in first aspect of the present invention,
a screen device for receiving projection light including first projection light and second projection light, the screen device comprising:
a first screen for receiving and forming the first projection light as an image and then displaying a first image which is represented by the first projection light;
a second screen for receiving and forming as an image the second projection light of which focal length is larger than a length of the first projection light and then displaying a second image which is represented by the second projection light; and
a light shielding part to prevent light emitted concurrently with display of the first image from arriving at the second screen from an opposite face of a face on which the first screen has received the first projection light.

According to a head-up display device in second aspect of the present invention, a head-up display device comprising:
the screen device according to the screen device of the first aspect,
a display for emitting the projection light; and
a imaging position adjustment unit for receiving the projection light that is emitted from the display, changing a focal length of the projection light that is at least a part of the incident projection light, and adjusting the resultant light to the projection light of which focal length is different therefrom,
wherein first display light representative of the first image that has been displayed on the first screen and second display light representative of the second image that has been displayed on the second screen are emitted towards a light transmission member, and the first image and the second image each are displayed as a virtual image via the light transmission member.

### EFFECT OF THE INVENTION

According to the present invention, it is possible to improve a quality of a display image.

### BRIEF DESCRIPTION OF THE DRAWINGS

[Fig. 1] Fig. 1 is a schematic view showing an embodiment of a screen device and a head-up display device, of the present invention.
[Fig. 2] Fig. 2 is s a schematic view showing a configuration of a screen device portion of an embodiment of the present invention.
[Fig. 3] Fig. 3 is a schematic perspective view, a front view, and a side view showing the configuration of the screen device portion of the embodiment of the present invention.

### MODE FOR CARRYING OUT THE INVENTION

Hereinafter, an embodiment of a screen device and a head-up display device, according to the present invention, will be described with reference to the accompanying drawings.

A screen device 1 of the present invention is directed to a screen device 1 for receiving projection light L including first projection light L1 and second projection light L2, and is provided with: a first screen 41 for receiving and forming the first projection light L1 as an image and then displaying a first image (hereinafter, referred to as a first display image) M1 which is represented by the first projection light L1; a second screen 42 for receiving and forming as an image the second projection light L2 of which focal length is larger than that of the first projection light L1 and then displaying a second image (hereinafter, referred to as a second display image) M2 which is represented by the second projection light L2; and a light shielding part 50 to prevent arrival at the second screen 42, of the light that is emitted concurrently with the display of the first display image M1 from an opposite face of a face on which the first screen 41 has received the first projection light L1.

The screen device 1 can be applied to a head-up display device 100 for forming a plurality of display images M as images on a plurality of screens 40, respectively, and then causing a virtual image V to be displayed and visually recognized via a light transmission member (hereinafter, referred to as a front glass) 200 by a plurality of display light beams N exerted by the display images, each of which has been formed as an image.

The head-up display device 100 of the present invention is provided with: the screen device 1; and a display 21 for emitting projection light L; and a imaging position adjustment unit 30 for receiving the projection light L that is emitted from the display 21, changing a focal length of at least partial projection light L of the incident projection light L, and adjusting the resultant light to the projection light L of which focal length is different therefrom, is characterized in that first display light N1 representative of a first display image M1 which is displayed on a first screen 41 and second display light N2 representative of a second display image M2 which is displayed on a second screen 42 are emitted towards a front glass 200, and the first display image M1 and the second display image M2 each are displayed as a virtual image V via the front glass 200.

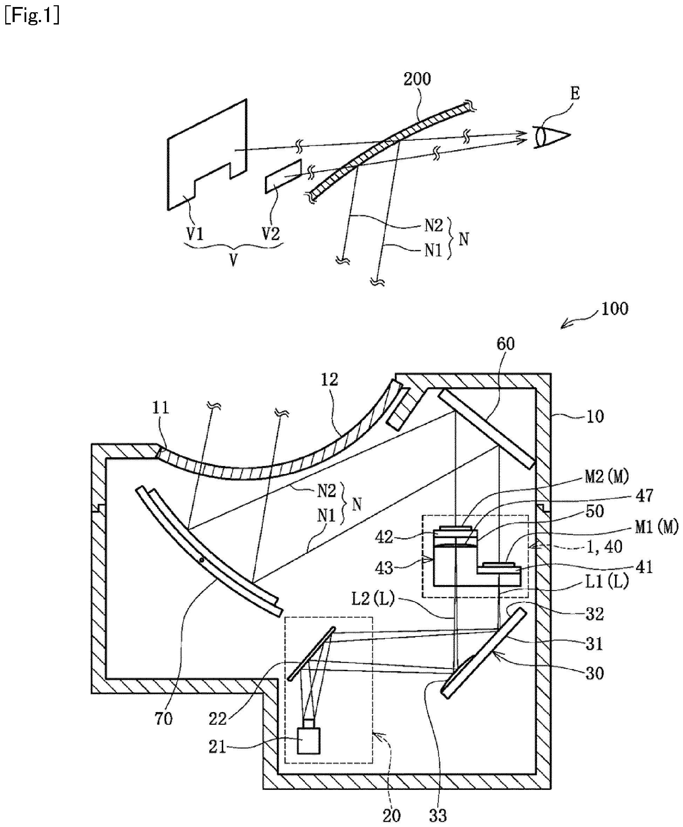

The head-up display device 100 of the embodiment is mounted onto a motor vehicle, for example, and as shown in Fig. 1, is equipped with: the display 21; the imaging position adjustment unit 30; the first screen 41; the second screen 42; the light shielding part 50; and in addition thereto, a casing 10 to house these constituent elements; and a control board (not shown).

In the head-up display device 100, the first display light N1 and the second display light N2 from the two display images M1, M2, that is, the first display image M1 exerted by the first projection light L1 that is projected onto the first screen 41 of the screen 40 via the imaging position adjustment unit 30 from the display 21 of the projection unit 20; and the second display image M2 exerted by the second projection light L2 of which focal length is different therefrom, which is projected onto the second screen 42 of the screen 40 via the imaging position adjustment unit 30 from the display 21 of the projection unit 20 similarly, are reflected towards the front glass 200 of a vehicle by a plane mirror 60 and a concave mirror 70, and to a user (viewer) E, a first virtual image V1 of the first display image M1 and a second virtual image V2 of the second display image M2 are thereby displayed as two virtual images of which display lengths are different from each other.

The casing 10 is formed of a black light shielding synthetic resin, for example, and internally houses: the display 21 of the projection unit 20; the imaging position adjustment unit 30; the first screen 41 and the second screen 42 that are a plurality of screens 40; the plane mirror 60; and the concave mirror 70, and the control board (not shown) is externally mounted thereto.

The casing 10 has an opening part 11 to cause the display light N, which will be described later, to pass through the front glass 200, and the opening part 11 is covered with a light transmissible cover 12.

The projection unit 20, as shown in Fig. 1, is equipped with: the display 21 to generate and emit the first projection light L1 representative of the first display image M1 and the second projection light L2 representative of the second display image M2; and a fold mirror 22 to reflect and return the first projection light L1 and the second projection light L2 which have been made incident from the display 21.

From the fold mirror 22, the first projection light L1 and the second projection light L2 are made incident to the imaging position adjustment unit 30, and a focal length of a respective one of the first projection light L1 and the second projection light L2 that have been made incident thereto is adjusted by the imaging position adjustment unit 30; the light beams are respectively projected onto the first screen 41 and the second screen 42 of the screen 40; and the first display image M1 and the second display image M2 of which focal lengths are different from each other are respectively formed as images.

The display 21 has: a reflection display element such as a DMD (Digital Micromirror Device) or an LCOS (registered trademark: Liquid Crystal On Silicon) and a transmissive display element such as a TFT (Thin Film Transistor) liquid crystal panel, and emits the first projection light L1 and the second projection light L2 to respectively display the first display image M1 and the second display image M2 towards the fold mirror 22, based on a control signal from the control board which is not shown.

Incidentally, the display 21 is controlled to display the display image M (the first display image M1, the second display image M2) that has been distorted in advance in view of the optical characteristics and layout of the respective optical members so as not to produce the virtual image V (the first virtual image V2, second virtual image V2) that has been distorted, when it is visually recognized by the user E via the imaging position adjustment unit 30, the first screen 41, the second screen 42, the plane mirror 60, the concave mirror 70, front glass 200 or the like.

The fold mirror 22 is obtained by forming a reflection film by means of vapor deposition or the like, on a surface of a substrate made of a synthetic resin or a glass material or the like, for example, and is also a plane mirror to reflect, onto the imaging position adjustment unit 30, the first projection light L1 and the second projection light L2 that has been emitted from the display 21. The fold mirror 22 is provided to be thereby able to make a package of the projection unit 20 more compact by returning an optical path or the like.

Incidentally, a plurality of fold mirrors 22 may be provided between the display 21 and the imaging position adjustment unit 30, or alternatively, the fold mirror 22 may be emitted.

The imaging position adjustment unit 30 is composed of a imaging position adjustment mirror 31, for example.

The imaging position adjustment mirror 31 is obtained by forming a reflection film by means of vapor deposition or the like on a surface of a substrate such as a synthetic resin or a glass material or the like, for example, and on the same substrate, has: a first reflection face 32 to receive the first projection light L1; and a second reflection face 33 to receive the second projection light L2. On the same substrate, the first reflection face 32 and the second reflection face 33 are provided to be thereby able to prevent an occurrence of an assembling error and to eliminate adjustment at the time of assembling.

In the embodiment, in the first reflection face 32, the composite reflection face is formed of a plane, and the first projection light L1 having received thereon is reflected onto the first screen 41 without changing the focal length, and the first display image M1 is thereby formed as an image on a surface side of the first screen 41.

In addition, in the second reflection face 33, the composite reflection face is formed of a free curved face, and the second projection light L2 having been received thereon is reflected onto the second screen 42 while the focal length is changed so as to increase, and the second display image M2 is thereby formed as an image on a surface side of the second screen 42.

Incidentally, the imaging position adjustment unit 30 can also be configured in a lens manner without being limitative to the case in which it is composed of the imaging position adjustment mirror 31 equipped with two reflection faces 32, 33.

In the lens manner, a circular lens is formed in a divisional shape by dividing the lens in a vertical direction, for example, and it is possible to fix a first lens and make a second lens movable in a longitudinal direction along an optical path to thereby change the focal length, or alternatively, it is possible to fix the first lens and the second lens to be displaced from each other in the longitudinal direction to thereby adjust the focal length.

Next, the screen device 1 in the head-up display device 100 will be described.

The screen device 1, as shown in Fig. 1, is directed to the screen device 1 for receiving the projection light L including the first projection light L1 and the second projection light L2, and is provided with: the first screen 41 for receiving and forming the first projection light L1 as an image and then displaying the first display image M1 that is represented by the first projection light L1; the second screen 42 for receiving and forming as an image the second projection light L2 of which focal length is larger than that of the first projection light L1 and then displaying the second display image M2 that is represented by the second projection light L2; and the light shielding part 50 to prevent arrival at the second screen42, of the light that is emitted concurrently with the display of the first display image M1 from the opposite face of the face on which the first screen 41 has received the first projection light L1.

In the head-up display device 100, the imaging position adjustment mirror 31 of the imaging position adjustment unit 30 receives the projection light L (the first projection light L1, the second projection light L2) of the display image M (the first display image M1, the second display image M2) that is generated on the display 21, and the projection light L of which focal length has been adjusted by the imaging position adjustment mirror 31 is emitted to the screen 40.

The screen device 1 receives, on the first screen 41, the first projection light L1 of the first display image M1 of which focal length is smaller, and then, forms the first display image M1 as an image on the first screen 41. Similarly, this screen device receives, on the second screen 42, the second projection light L1 of the second display image M2 of which focal length is large, and then, forms the second display image M2 as an image on the second screen 42.

From the first display image M1 that has been formed as an image on the first screen 41, the first display light N1 that is emitted from the opposite side to a light reception face concurrently with the display of the first display image M1 is emitted towards a front glass 200 via the plane mirror 60 and the concave mirror 70. Similarly, from the second display image M2 that has been formed as an image on the second screen 42, the second display light N2 that is emitted from the opposite face to the light reception face concurrently with the display of the second display image M2 is emitted towards the front glass 200 via the plane mirror 60 and the concave mirror 70.

The screen 40 is composed of two screens, i.e., the first screen 41 and the second screen 42. The first screen 41 is disposed rearward in the light reception direction of the projection light L (the first projection light L1), that is, at a proximal side to the imaging position adjustment mirror 31 of the imaging position adjustment unit 30, and the focal length of the first projection light L1 is reduced. The second screen 42 is disposed at a position which is spaced from the imaging position adjustment mirror 31, and which is a front side in the light reception direction of the projection light L (the second projection light L2), and the focal length of the second projection light L2 is increased. In this manner, the first screen 41 and the second screen 42 are disposed longitudinally in the light reception direction with respect to the projection light L, and is also disposed while the focal length is changed.

The first screen 41 is a transmissive screen for receiving, on the light reception face, the first projection light L1 that has been emitted from the projection unit 20, and displaying the first display image M1 on the surface side that is opposite to the light reception face. The first screen 41 is composed of a holographic diffuser, a micro-lens array, a diffusion plate or the like, for example.

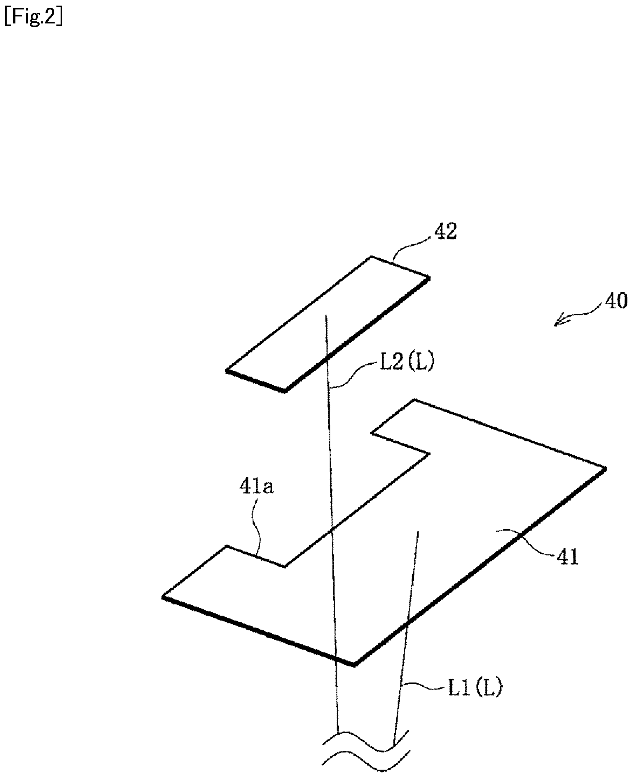

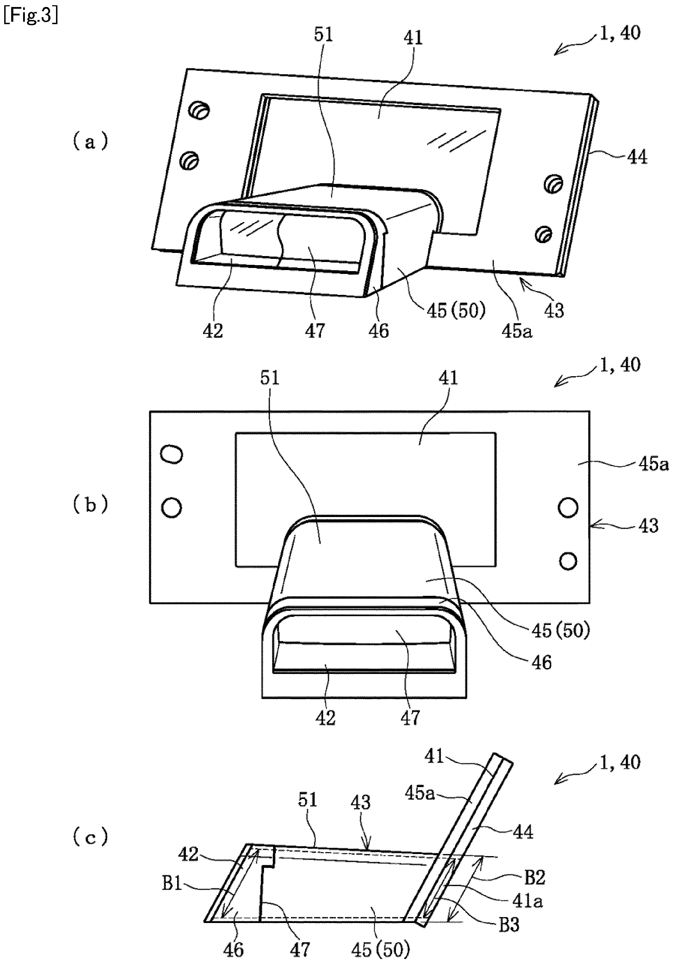

The first screen 41, as shown in Fig. 2 and Fig. 3, is formed in a shape having a reversely concave-shaped display area in which a cutout part 41a obtained by cutting out a part of a substantially rectangular outer edge portion in a rectangular shape is provided. Incidentally, owing to the reversely concave shape of the first screen 41, the first virtual image V1 also has a display area formed in a reversely concave shape.

When the first screen 41 forms the first display image M1 as an image and then displays the image, the first display light N1 indicative of the first display image M1 is emitted from the surface side of the first screen 41 that is the opposite face of the light reception face and then is projected onto the front glass 200 by the plane mirror 60 and the concave mirror 70, and the resultant image is reflected in the direction of the user E (an eye box) by the front glass 200. In this manner, the user E can visually recognize the first virtual image V1 at the opposite side of the front glass 200.

The second screen 42 is formed in a rectangular shape which is a substantially similar shape to that of a cutout part 41a of the first screen 41, and is a transmissive screen for receiving, on the light reception face, the second projection light L2 that has been emitted from the display 21 of the projection unit 20 and then displaying the second display image M2 on the surface side opposite to the light reception face, and as in the first screen 41, is composed of a holographic diffuser, a micro-lens array, a diffusion plate or the like, for example. The second projection light L2, as shown in Fig. 2, passes through the cutout part 41a of the first screen 41, and arrives at the second screen 42.

When the second screen 42 displays the second display image M2, the second display light N2 indicative of the second display image M2 is emitted from the surface side of the second screen 42 that is the opposite face to the light receiving face; is projected onto the front glass 200 by the plane mirror 60 and the concave mirror 70; and displays the second virtual image V2 on the opposite side of the front glass 200 when it is seen from the user E.

In the screen 40, as shown in Fig. 1 to Fig. 3, the first screen 41 is disposed to be more proximal to the display 21 of the projection unit 20 than the second screen 42.

In this manner, an optical path length of the first display lightN1 that is emitted from the first screen 41 towards the user E becomes larger than an optical path length of the second display light N2 that is emitted from the second screen 42 towards the user E. Therefore, a length (a display length) from the user E to a position at which the first virtual image V1 is displayed becomes larger than a length (a display length) from the user E to a position at which the second virtual image V2 is displayed.

Accordingly, in the head-up display device 100, the first virtual image V1 can be displayed at a position which is visualized as if it were more distant from the second virtual image V2, and for example, the display length of the first virtual image V1 can be set to 5 m, and the display length of the second virtual image V2 can be set to 2 m.

In addition, the first screen 41 is disposed to have a predetermined angle (including 0 degree) with respect to an optical axis of the first display light N1 from the first screen 41 to the user E, and the second screen 42 is similarly disposed to have a predetermined angle (including 0 degree) with respect to an optical axis of the second display light N2 from the second screen 42 towards the user E.

Incidentally, in a case where the first screen 41 (the second screen 42) has a predetermined angle with respect to the optical axis of the first display light N1 (the second display light N2) as well, the first virtual image V1 and the second virtual image V2 each are formed as an image so as to approximately vertically face each other with respect to a front eye line of the user E by the free curved face of the concave mirror 70. When the user E has virtually recognized the first virtual image V1 (the second virtual image V2), the display length is kept constant in any region in the first virtual image V1 (the second virtual image V2), and even if the user E does not make a focal point movement, the entirety of the first virtual image V1 (the second virtual image V2) can be easily visually recognized.

The light shielding part 50, as shown in Fig. 3, is provided as a light shielding part main body 45 in a screen holder 43 for mounting the first screen 41 and the second screen 42.

The screen holder 43 is formed of a synthetic resin material, for example.

In the light shielding part 50, the first display light N1 having been formed as an image on the first screen 41, that is emitted from the opposite face to the light reception face of the first screen 41 (the plane mirror 60 side) concurrent with image formation of the first display image M1 of which focal length is smaller, gets into the second projection light L2 that is formed as an image on the second screen 42 of which focal length is longer, to thereby prevent degradation of the quality of the second display image M2.

The screen holder 43 is equipped with: a base plate 44 formed in the shape of a frame, in which an opening part taken along the reverse concave shape of the first screen 41 has been formed; a light shielding part main body 45 which is mounted to the base plate 44, and which constitutes the light shielding part 50 equipped with an opening part of which shape is substantially similar to a shape of the cutout part 41a of the first screen 41 at a front side; and a collar 46 which is attached at a tip end of the light shielding part main body 45, and which mounts the second screen 42 thereto.

On the base plate 44, the first screen 41 is disposed to close the opening part, and an outer circumferential part of the first screen 41 is sandwiched by a frame part 45a formed in the shape of a frame, which is integral with the light shielding part main body 45, and the first screen 41 is thereby fixed. At the same time, the base plate 44 and the light shielding part main body 45 are fixed via the frame part 45a.

The light shielding part main body 45 is formed in a cylindrical shape of which shaft is substantially similar to that of the cutout part 41a of the first screen 41, for example, and is formed in a shape in which a sectional area of an opening which is an optical path of the second projection light L2 increases significantly from a rear side of the base plate 44 side towards a front opening part. In this manner, the second screen 42 to be mounted to the collar 46 that is attached to a tip end opening part of the light shielding part main body 45 can be made to have a larger area, and a gap between the first virtual image V1 and the second virtual image V2 can be reduced.

In addition, the second screen 42 is made to have a larger area than that of the cutout part 41a of the first screen 41, whereby the outer circumferential part of the light shielding part main body 45 of the light shielding part 50 is visualized as if it were smaller when it is seen in the direction of the user E, and the outer circumferential part of the light shielding part main body 45 can be hardly visually recognized as well.

Incidentally, a width B1 of the second screen 42, as shown in Fig. 3 (c), is larger in comparison with a width B3 of an opening at a rear side of the light shielding part main body 45; and however, it is not always meant to be larger than a width B2 of the cutout part 41a of the first screen 41. That is, there may also be a case in which the width B1 of the second screen 42 is the same as, or smaller than, the width B2 of the cutout part 41a of the first screen 41, according to the shape of the light shielding part main body 45.

The light shielding part main body 45 surrounds the optical path of the second projection light L2 to thereby shield the entry of the first display light N1 so that reception of the first display light N1 from the first display image M1 concurrently with the image formation on the first screen 41 is not achieved by the second screen 42 at the front side.

In the light shielding part main body 45, a stepped part is formed to be more inward than a tip end opening part; a field lens 47 is disposed; and an outer circumferential part of the field lens 47 is fixed by the cylindrical collar 46 that is attached through the tip end opening part of the light shielding part main body 45.

The second screen 42 is attached to the tip end opening part of the cylindrical collar 46, and an outer circumferential part of the second screen 42 is fixed.

In this manner, in the screen holder 43, the first screen 41 that has been mounted to the base plate 44 is positioned at a rear side in the light reception direction of the projection light L from the display 21; the second screen 42 that has been mounted to a tip end of the collar 46 is mounted in a state in which the second screen is positioned at a front side in the light reception direction; the optical path of the second projection light L2 to be received by the second screen 42 is surrounded by the light shielding part main body 45; and the first display light N1 and the second projection light L2 are shielded.

The field lens 47 is made of a transparent material such as a synthetic resin material or a glass material, for example, and is disposed in the course of the optical path of the second projection light L2 inside of the light shielding part main body 45, and further changes a traveling direction of the second projection light L2 to the inside and then guides the light to the second screen 42. This lens is intended to prevent the second projection light L2 from radiating a wider range than that of the second screen 42 and form the light on the second screen 42 as an image with high efficiency in light utilization.

The second projection light L2 that forms the second display image M2 as an image on the second screen 42 is transmitted inside the light shielding part main body 45 formed in a cylindrical shape and then the resultant light is guided to the second screen 42 that is the tip end opening part; and therefore, there is no case in which the first display light N1 that has been formed as an image on the first screen 41 at the rear side gets into, and is formed as an image on, the second screen 42, and the display quality of the second display image M2 can be better maintained.

Incidentally, it is sufficient if the light shielding part main body 45 constituting the light shielding part 50 is equipped with at least a wall face taken along a boundary between the first screen 41 and the second screen 42 to be able to prevent image formation of strayed light (redundant light), and according to the layout or shape of the second screen 42, this main body is not limitative to the cylindrical shape, and may be formed in a substantially U-shape without a wall face at an opening end side of the cutout part 41a.

The light shielding part 50 is equipped with a visual recognition preventing part 51 in the light shielding part main body 45.

The visual recognition preventing part 51 surrounds the optical path of the second projection light L2 by the light shielding part main body 45 that constitutes the light shielding part 50 so as to be thereby able to prevent the first display light N1 from getting into the second projection light L2, while eliminating an apprehension that the first display light N1 is reflected onto the outside of the light shielding part main body 45 and then by the reflection light, it is visually recognized that there exists light shielding part main body 45 that is the light shielding part 50.

The visual recognition preventing part 51 is configured by applying a reflection preventing coating outside of the light shielding part main body 45 that is the light shielding part 50. In the visual recognition preventing part 51, for example, a black coating is employed; reflection of the first display light N1 is prevented by the reflection preventing coating; and it is not visually recognized that there exists the light shielding part main body 45 that is the light shielding part 50. In this manner, by means of the first screen 41 and the second screen 42, it is possible to display, in a seamless manner, two display images, i.e., the first display image M1 and the second display image M2 of which focal length are different from each other.

Incidentally, the visual recognition preventing part 51 is not limitative to the case in which it is composed of the reflection preventing coating to prevent reflection to thereby prevent reflection of the first display light N1, and a reflection face of a Fresnel structure is provided outside of the light shielding part main body 45 that is the light shielding part 50 so as to disable visual recognition by means of reflection to an extent such that the reflected light does not get into an eye of the viewer E.

The plane mirror 60 is obtained by forming a reflection film by means of vapor deposition or the like, on a surface of a substrate made of a synthetic resin or a glass material, for example, and reflects towards the concave mirror 70 the first display light N1 and the second display light M2 that has been respectively emitted from the first screen 41 and the second screen 42.

The concave mirror 70 is obtained by forming a reflection film by means of vapor deposition or the like on a surface of a substrate made of a synthetic resin material, for example, and is also a mirror having a concave free curved face to further reflect the first display light N1 and the second display light N2 that have been reflected onto the plane mirror 60 and then emit the reflected light towards the front glass 200.

The first display light N1 and the second display light N2 that have been reflected onto the concave mirror 70 pass through the transmissive cover 12 that has been provided in the opening part 11 of the casing 10 and then arrive at the front glass 200 that is the light transmission member.

The first display light N1 and the second display light N2 that have been reflected onto the front glass 200, at a front position of the front glass 200, respectively form two virtual images, i.e., the first virtual image V1 and the second virtual image V2 of which display lengths are different from each other.

In this manner, the head-up display device 100 allows the user E to visually recognize both of the virtual images V (the first virtual image V1 and the second virtual image V2) and the landscape or the like that really exists at the front side of the front glass 200.

Incidentally, the concave mirror 70 has a function of a magnification mirror to magnify the display image M that has been displayed on the projection unit 20 and then reflect the image to the front glass 200 side. That is, the first virtual image V1 and the second virtual image V2 that are visually recognized by the user E are the images obtained by magnifying the first display image M1 and the second display image M2 that are displayed by the display 21 of the projection unit 20. In addition, the concave mirror 70 has a function to reduce distortion of the first virtual image V1 and the second virtual image V2 exerted by the fact that the front glass 200 is formed as a curved face.

The screen device 1 configured in this manner is directed to a screen device 1 for receiving the projection light L including the first projection light L1 and the second projection light L2, and is provided with: the first screen 41 for receiving and forming the first projection light L1 as an image and then displaying the first image (the first display image) M1 that is represented by the first projection light L1; the second screen 42 for receiving and forming as an image the second projection light L2 of which focal length is larger than that of the first projection light L1 and then displaying the second image (the second display image) M2 that is represented by the second projection light L2; and the light shielding part 50 to prevent arrival at the second screen 42, of the first display light N1 that is emitted concurrently with the display of the first image (the first display image) M1 from the opposite face to the face on which the first screen 41 has received the first projection light L1; and therefore, after the first projection light L1 that displays the first display image M1 has been formed as an image on the first screen 41 at the rear side; by the light shielding part 50, it is possible to prevent the first display light N1 from getting into the second projection light L2 that displays the second display image M2 and thereafter being formed as an image on the second screen 42 at the front side, and it is possible to improve the display quality of the first display image M1 and the second display image M2 that are respectively displayed on the first screen 41 and the second screen 42 as well.

Therefore, it is possible to provide the screen device 1 that is capable of displaying with high quality the display images M1, M2 of which focal lengths are different from each other.

In addition, in the screen device 1, the light shielding part 50 is equipped with the visual recognition preventing part 51 to prevent entry and image formation of the light that is reflected to the outside of the light shielding part 50 into the first display light N1 that is emitted concurrently with the display of the first display image M1 from the opposite face to the light reception face of the first screen 41, whereby the first projection light L1 having formed as an image on the first screen 41 of which focal length is smaller can be prevented from being formed as an image on the second screen 42 at the front side in the light reception direction, by means of the visual recognition preventing part 51 that is formed of the reflection preventing coating or the reflection face of the Fresnel structure, and it is possible to prevent the existence of the light shielding part 50 from being visually recognized as well.

Further, the screen device is applied to the head-up display device 100 to be thereby able to improve the display quality and allow the viewer E to visually recognize the virtual image formed by the plurality of display images M of which display lengths are different from each other.

Furthermore, in the screen device 1, the light shielding part 50 is positioned between the first screen 41 and the second screen 42, a diameter of which increases on the second screen 42 side more significantly than on the first screen 41 side, whereby it is possible to increase an area of the second screen 42 at the front side in the light reception direction, and it is possible to reduce a gap between the plurality of virtual images of which focal lengths are different from each other as well. Still furthermore, an area of the outside of the light shielding part 50 is visualized as if it were smaller when it is seen in the direction of the viewer (the user) E, and the outside of the light shielding part 50 can be thereby hardly visually recognized.

In this manner, the display quality of the display image can be improved more remarkably.

The head-up display device 100 configured as described above is equipped with: the screen device 1; the display 21 for emitting projection light; and the imaging position adjustment unit 30 for receiving the projection light L from the display 21 and changing the focal length of at least partial projection light L of the incident projection light L and then adjusting and reflecting the resultant light to projection light L1 of which focal length is different therefrom, in which the first display light N1 representative of the first display image M1 that has been displayed on the first screen 41 and the second display light N2 representative of the second display image M2 that has been displayed on the second screen 42 are emitted towards the front glass 200, and the first display image M1 and the second display image M2 each are displayed as the virtual image V via the front glass 200; and therefore, after the first projection light L1 displaying the first display image M1 has been formed as an image on the first screen 41, by means of the light shielding part 50 the first display light N1 is prevented from getting into the second projection light L1 that displays the second display image M2 and thereafter being formed as an image on the second screen 42, and it is possible to improve the display quality of the first display image M1 and the second display image M2 that are respectively displayed in the first screen 41 and the second screen 42.

In addition, in the head-up display device 100, the plurality of projection light L can be emitted and formed as an image by one display 21, and the equipment can be made simple and compact.

Further, in the head-up display device 100, the light shielding part 50 is equipped with the visual recognition preventing part 51 to prevent entry and image formation of the light that is reflected to the outside of the light shielding part 50 from getting into the first display light N1 that is emitted concurrently with the display of the first display image M1 from the opposite face to the light reception face of the first screen 41, whereby the first projection light L1 having formed as an image on the first screen 41 of which focal length is smaller can be prevented from being formed as an image on the second screen 42 at the front side in the light reception direction, by means of the visual recognition preventing part 51 that is formed of the reflection preventing coating or the reflection face of the Fresnel structure; it is possible to prevent the existence of the light shielding part 50 from being recognized; and it is possible to improve the display quality more remarkably and allow the viewer E to visually recognize the virtual image formed by the plurality of display images of which display lengths are different from each other as well.

In the head-up display device 100, the light shielding part 50 is positioned between the first screen 41 and the second screen 42, and is formed in a cylindrical shape which surrounds the optical path of the second projection light L2, a diameter of which increases on the second screen 42 side than on the first screen 41 side, whereby it is possible to increase the area of the second screen 42 at the front side in the light reception direction, and it is possible to reduce the gap between the plurality of virtual images of which focal lengths are different from each other as well. In addition, the area of the outside of the light shielding part 50 is visualized as if it were smaller when it is seen in the direction of the viewer (the user) E, and the outside of the light shielding part 50 can be thereby hardly visually recognized.

In this manner the display quality of the display image can be improved more remarkably.

Incidentally, although the foregoing embodiment was described by example of the case in which the screen 40 is composed of two screens, the first screen 41 and the second screen 42, the screen may be composed of three or more screens without being limitative thereto.

In addition, although, in respect of the screen shape, the first screen 41 was formed in a reverse concave shape having the cutout part 41a, whereas the second screen 42 was formed in a rectangular shape which is similar to that of the cutout part, it may be that the first screen 41 is formed in a circular or polygonal shape or the like or is formed in a shape having a cutout part or hole part which is similar to the shape of the second screen 42, and that the second screen 42 is configured in a shape as the cutout part or hole part of the first screen 41, without being limitative thereto.

Further, the second screen 42 may be disposed to be adjacent to the first screen 41, a shape of which may be appropriately selected as a substantial gourd shape or the like, for example.

In these cases, it is sufficient if the light shielding parts 50 are sequentially set up along the boundary between the first screen 41 that is set relatively at the rear side in the light reception direction and the second screen 42 that is set at a more frontal side so as to prevent entry of the first display light N1 into the second projection light L2.

### INDUSTRIAL APPLICABILITY

The present invention is applicable to a head-up display device to be mounted to a mobile object such as a vehicle, for example.

### DESCRIPTION OF REFERENCE NUMERALS

- 1: Screen device
- 100: Head-up display device
- 10: Casing
- 11: Opening part
- 12: Light transmissive cover
- 20: Projection unit
- 21: Display
- 22: Fold mirror
- 30: Imaging position adjustment unit
- 31: Imaging position adjustment mirror
- 32: First reflection face
- 33: Second reflection face
- 40: Screen
- 41: First screen
- 41a: Cutout part
- 42: Second screen
- 43: Screen holder
- 44: Base plate
- 45: Light shielding part main body
- 45a: Frame part
- 46: Collar
- 47: Field lens
- 50: Light shielding part
- 51: Visual recognition preventing part
- 60: Plane mirror
- 70: Concave mirror
- 200: Front glass (light transmission member)
- B1: Width of second screen
- B2: Width of cutout part of first screen
- B3: Width of opening at rear side of light shielding part main body
- M: Display image
- M1: First display image
- M2: Second display image
- V: Virtual image
- V1: First virtual image
- V2: Second virtual image
- L: Projection light
- L1: First projection light
- L2: Second projection light
- N: Display light
- N1: First display light
- N2: Second display light
- E: User (viewer)

## Claims

1. A screen device for receiving projection light including first projection light and second projection light, the screen device comprising:
a first screen for receiving and forming the first projection light as an image and then displaying a first image which is represented by the first projection light;
a second screen for receiving and forming as an image the second projection light of which focal length is larger than a length of the first projection light and then displaying a second image which is represented by the second projection light; and
a light shielding part to prevent light emitted concurrently with display of the first image from arriving at the second screen from an opposite face of a face on which the first screen has received the first projection light.

2. The screen device according to claim 1, wherein
the light shielding part comprises an image formation preventing part to prevent entry and image formation of light which is reflected to an outside of the light shielding part into light which is emitted concurrently the display of the first image from the opposite face of the first screen.

3. The screen device according to claim 1 or claim 2, wherein
the light shielding part is positioned between the first screen and the second screen, and is formed in a cylindrical shape which surrounds an optical path of the second projection light, a diameter of which increases on the second screen side more significantly than on the first screen side.

4. A head-up display device comprising:
the screen device according to any one of claims 1 to 3,
a display for emitting the projection light; and
a imaging position adjustment unit for receiving the projection light that is emitted from the display, changing a focal length of the projection light that is at least a part of the incident projection light, and adjusting the resultant light to the projection light of which focal length is different therefrom,
wherein first display light representative of the first image that has been displayed on the first screen and second display light representative of the second image that has been displayed on the second screen are emitted towards a light transmission member, and the first image and the second image each are displayed as a virtual image via the light transmission member.
